# EUROPÄISCHE PATENTSCHRIFT

(11) **EP 3 948 911 B1**
(45) Veröffentlichungstag und Bekanntmachung des Hinweises auf die Patenterteilung: **31.12.2025**
(21) Anmeldenummer: 20710808.5
(22) Anmeldetag: 28.02.2020
(51) Int. Cl.: H01H 11/00, H02H 5/04, H02H 6/00, H02H 7/22, H02H 1/00

(54) **ÜBERWACHUNGSVERFAHREN EINER ELEKTROENERGIEÜBERTRAGUNGSEINRICHTUNG**
METHOD FOR MONITORING OF AN ELECTRIC ENERGY TRANSFER DEVICE
PROCÉDÉ DE SURVEILLANCE D'UN DISPOSITIF DE TRANSMISSION D'ÉNERGIE ÉLECTRIQUE

(30) Priorität: 28.03.2019 DE 102019204307
(43) Veröffentlichungstag der Anmeldung: 09.02.2022
(73) Patentinhaber: Siemens Energy Global GmbH & Co. KG, 81739 München (DE)
(72) Erfinder: ANDREE, Hendrik, 97514 Oberaurach/Dankenfeld (DE); HEINECKE, Matthias, 14163 Berlin (DE); LEHMANN, Thomas, 13583 Berlin (DE); ZAEDOW, Benjamin, 13189 Berlin (DE)
(86) Internationale Anmeldenummer: PCT/EP2020/055234
(87) Internationale Veröffentlichungsnummer: WO 2020/193063

(56) Entgegenhaltungen:
- WO-A1-2017/174994
- CN-U- 203 225 200
- US-A- 4 794 327
- US-A1- 2011 137 483
- US-A1- 2014 180 616

## Beschreibung

Die Erfindung betrifft ein Überwachungsverfahren einer Elektroenergieübertragungseinrichtung mit einem ersten Phasenleiter und einem zweiten Phasenleiter, wobei zu einem gleichen Zeitpunkt eine Temperatur des ersten Phasenleiters und eine Temperatur des zweiten Phasenleiters ermittelt wird, die ermittelte Temperatur des ersten Phasenleiters mit der ermittelten Temperatur des zweiten Phasenleiters verglichen wird und dass bei Vorliegen einer Abweichung der ermittelten Temperaturen voneinander eine Signalisierung erfolgt.

Eine Elektroenergieübertragungseinrichtung mit einem ersten Phasenleiter und einem zweiten Phasenleiter ist beispielsweise aus der Offenlegungsschrift DE 10 2016 213 158 bekannt. Dort ist eine Schaltgeräteanordnung beschrieben, welche innerhalb eines Kapselungsgehäuses mehrere Unterbrechereinheiten aufweist, die jeweils Teil eines Phasenleiters sind. In der Figur sind dabei ein erster Phasenleiter sowie ein zweiter Phasenleiter mit einer ersten Unterbrechereinheit sowie einer zweiten Unterbrechereinheit dargestellt. Aus dem US Patent US 4,794,327 ist ein Sensormodul bekannt, welches von einer Hochspannungsleitung energetisch versorgt wird. Mehrere dieser Sensormodule können an mehreren Phasenleitern angeordnet sein, wobei verschiedene Größen, wie ein elektrischer Strom, eine elektrische Spannung oder eine Leitertemperatur ermittelt werden. Um die Sensormodule mit einer gemeinsamen Auswerteeinheit drahtlos zu verbinden, ist ein getaktetes Übertragen von Messwerten der jeweiligen Sensormodule vorgeschlagen. Der US Veröffentlichung US 2011/0137483 A1 ist die Fernüberwachung eines Freileitungsseiles unter Berücksichtigung der Seiltemperatur entnehmbar. Dem chinesischen Gebrauchsmuster CN 203225200U ist ein Vakuumleistungsschalter entnehmbar, welcher mit einem Temperatursensor ausgestattet ist. Die US Veröffentlichung US 2014/0180616 A1 beschreibt ein System sowie ein Verfahren zum Berechnen der Übertragungskapazität einer Übertragungsleitung. Der internationalen Veröffentlichung WO 2017/174994 A1 ist ein Verfahren zum Detektieren von Kontaktierungsfehlern an Kontaktierungsstellen entnehmbar. An fehlerhaften Kontaktierungsstellen können erhöhte Temperaturen auftreten. Temperaturen an den Kontaktierungsstellen werden überwacht, um Kontaktierungsfehler zu ermitteln.

An Schaltgeräteanordnungen werden einerseits hohe Anforderungen hinsichtlich der zu übertragenden Leistung gestellt. Andererseits sollen, die Abmaße derartiger Elektroenergieübertragungseinrichtungen kompakt sein. Daher sind Elektroenergieübertragungseinrichtungen oft derart ausgelegt, dass nur geringe Reserven vorgehalten werden. Um unter diesen Rahmenbedingungen auch bei Überlastungen oder Störungen sicher operieren zu können, ist ein zuverlässiges überwachen der Elektroenergieübertragungseinrichtungen notwendig.

Somit ergibt sich als Aufgabe ein geeignetes Überwachungsverfahren für eine Elektroenergieübertragungseinrichtung anzugeben, die einen sicheren Betrieb eines ersten sowie eines zweiten Phasenleiters ermöglicht.

Erfindungsgemäß wird die Aufgabe bei einem Überwachungsverfahren der eingangs genannten Art dadurch gelöst, dass eine Verifizierung der Abweichung durch eine Änderungsgeschwindigkeit einer ermittelten Temperatur eines Phasenleiters und/ oder der Abweichung der ermittelten Temperaturen erfolgt.

Elektroenergieübertragungseinrichtungen dienen einem Transport von elektrischer Energie zwischen zwei Punkten. Dazu ist zwischen den Punkten eine entsprechende Leistung zu übertragen. Getrieben durch eine Potenzialdifferenz werden elektrische Ströme über Phasenleiter geleitet. Phasenleiter sind elektrisch leitende Einrichtungen, welcher der Führung eines Stromes dienen. Phasenleiter werden beispielsweise als Sammelschienen, Armaturkörper, Kuppeleinrichtungen, in Kabeln, an Schalteinrichtungen, in Freiluftausführung (AIS), Gasisolierten Schaltanlagen (GIS), in Transformatoren, Messwandlern usw. verwendet. Die Phasenleiter sind entsprechend elektrisch zu isolieren. Dazu kann beispielsweise eine Fluidisolation eingesetzt werden, die bevorzugt in Gasform vorliegt. Darüber hinaus können jedoch elektrisch isolierende Fluide im flüssigen Zustand verwendet werden. Das Fluid kann beispielsweise innerhalb eines Kapselungsgehäuses eingehaust sein und dort beispielsweise mit einem Druck beaufschlagt werden. Das Kapselungsgehäuse dient in diesem Falle als Druckbehälter, um einem Differenzdruck zwischen dem Inneren des Kapselungsgehäuses und der Umgebung des Kapselungsgehäuses standzuhalten. Ein Phasenleiter, welcher innerhalb des Kapselungsgehäuses zumindest teilweise angeordnet ist, wird innerhalb des Kapselungsgehäuses durch das ihn umspülende elektrisch isolierende Fluid elektrisch isoliert.

Je nach verwendetem Spannungssystem, z.B. Gleichspannung oder Wechselspannung, sind zumindest ein erster Phasenleiter sowie ein zweiter Phasenleiter einzusetzen. Beispielsweise kann bei einem Gleichspannungssystem (DC) der erste Phasenleiter den Hinstrom führen sowie der zweite Phasenleiter den Rückstrom führen. Bei einem Wechselspannungssystem, insbesondere bei einem mehrphasigen Wechselspannungssystem, können auch mehr als zwei Phasenleiter, bevorzugt drei Phasenleiter, zur Übertragung von elektrischer Leistung eingesetzt werden. Ein Phasenleiter wird dabei mit einer Wechselspannung (AC) beaufschlagt, die im Phasenleiter einen Wechselstrom treibt. Sowohl bei AC- als auch bei DC-Anwendungen ist die bevorzugte Belastung der Phasenleiter derart gewählt, dass jeder der Phasenleiter annähernd den gleichen Strom, d.h. die gleiche Energiemenge, transportiert. Aufgrund der Strombelastung des Phasenleiters kommt es an dem Phasenleiter zu Erwärmungserscheinungen. Gegenüber diesen Erwärmungen muss die eingesetzte elektrische Isolation widerstandsfähig sein. Bei bevorzugter gleichmäßiger Belastung der Phasenleiter, die zu einem Elektroenergieübertragungssystem gehören, stellt sich im Regelfalle eine gleichartige Wärmebelastung der einzelnen Phasenleiter ein. Aufgrund von Störungen oder auch asymmetrischen Belastungen, insbesondere im Wechselspannungssystem, kann es jedoch zu unterschiedlichen Strombelastungen und daraus folgenden unterschiedlichen Wärmebelastungen kommen. Insbesondere bei Störungen können abschnittsweise oder punktweise Impedanzerhöhungen zu entsprechenden erhöhten thermischen Belastungen des gestörten Phasenleiters führen. So können beispielsweise an elektrischen Schalteinrichtungen (Unterbrechereinheiten) aufgrund von Kontaktstörungen, z.B. Kontaktkorrosion, Abbranderscheinungen, fehlerhaften Schaltbewegungen usw. in einzelnen Phasen störungsbedingte Heißpunkte auftreten. Durch ein Messen der Temperaturen an jedem der Phasenleiter, also zumindest am ersten Phasenleiter und zumindest am zweiten Phasenleiter, kann in einfacher Weise auf eine gleichmäßige Belastung der einzelnen Phasenleiter untereinander rückgeschlossen werden. Äußere Einflüsse, wie Sonneneinstrahlung oder anderen Wärme- oder Kälteerscheinungen, wirken im Allgemeinen gleichmäßig auf die Phasenleiter ein. Eine Auswertung einer Temperaturdifferenz bietet die Möglichkeit derartige äußere Einflüsse zu kompensieren. Beispielsweise können Sensoren zur Temperaturmessung, an neuralgischen Punkten oder gleichmäßig verteilt oder in einem bestimmten Abschnitt eines Phasenleiters angeordnet sein. Dabei können so genannte Energie-Harvesting-Sensoren eingesetzt werden, die beispielsweise aus der zu messenden Größe, z.B. einer Temperatur, die nötige Energie beziehen, um ihrerseits ihre Messfunktion als Sensor wahrzunehmen. So ist es beispielsweise möglich, aufgrund von thermischen Differenzen zwischen der Oberfläche des Phasenleiters und der Umgebung des Phasenleiters elektrische Energie zu generieren und diese zum Messen der Temperatur des Phasenleiters einzusetzen und weiterhin diese elektrische Energie zu nutzen, um die Information über die gemessenen Werte zu übertragen. Eine derartige Übertragung kann beispielsweise drahtlos wirken.

Sind die Temperaturen der Phasenleiter ermittelt, liegen die Temperaturen unabhängig von dem elektrischen Zustand des Phasenleiters vor. Beispielsweise können auch im ausgeschalteten Zustand der Phasenleiter (kein Stromfluss liegt vor), die Temperaturen des Phasenleiters überwacht werden und ausgewertet werden. Eine Auswertung sollte dabei bevorzugte derart erfolgen, dass die Temperaturen vom ersten und zweiten Phasenleiter miteinander verglichen werden. In einem idealisierten Umfeld ist bei einer gleichmäßigen Belastung der Phasenleiter, z.B. beide Phasenleiter weisen keinen Stromfluss auf oder beide Phasenleiter weisen gleichartige Strombelastungen auf, die Temperatur zum gleichen Zeitpunkt auf den beiden Phasenleitern annähernd gleich groß. Auch bei von außen einwirkenden thermischen Ereignissen wird beispielsweise dem Einstrahlen von Wärme und z.B. Solarenergie, Heiz- oder Kühlelemente, kann bei einem ungleichmäßigen Einwirken der Störgröße eine Abweichung der Temperaturen auf den Phasenleitern auftreten. Für die Auswertung ist die Abweichung der Temperaturen einer der Kriterien. Tritt eine Abweichung der auf den beiden Phasenleitern oder mehreren Phasenleitern ermittelten Temperaturen auf, lässt dies darauf schließen, dass an einem der Phasenleiter eine untypische Situation vorliegt. Beispielsweise kann eine gelockerte Verbindungsstelle zu einem Heißpunkt führen. Des Weiteren können abgenutzte Schaltkontaktstücke zu lokalen Temperaturerhöhungen führen. Tritt dies nur an einem Phasenleiter auf, so ist nicht von einem regulären Altern oder einer allgemeinen Veränderung der Phasenleiter in gleicher Art und Weise auszugehen, sondern ist auf ein Ereignis zu schließen, welches einer näheren Betrachtung bedarf. Somit ist es möglich, bei einem Auftreten einer Abweichung zwischen den auf den beiden Phasenleitern ermittelten Temperatur eine Signalisierung vorzunehmen. Eine Signalisierung kann dabei verschiedenartig erfolgen. Eine Signalisierung kann in Form einer Warnung oder in Form eines unmittelbaren Einwirkens auf die Schaltanlage, z.B. eine Notabschaltung bewirken. Vor einer Signalisierung kann ein weiterer Indikator herangezogen werden, um ausgehend von der jeweiligen Temperaturdifferenz, die auch den Betrag Null aufweisen kann, eine verifizierte Abgabe einer Signalisierung vorzunehmen. Es kann jedoch auch vorgesehen sein, dass eine Verifizierung erst nach Abgabe einer Signalisierung erfolgt. Weiter Schritt können nach einer Signalisierung erfolgen.

Neben den zu gleichen Zeitpunkten ermittelten Temperaturen auf dem ersten sowie dem zweiten Phasenleiter wird über Zeitintervalle hinweg auch eine Änderung einer Temperatur an einem Phasenleiter verfolgt. Diese Temperaturänderung kann dabei mit unterschiedlichen Geschwindigkeiten auftreten. Beispielsweise kann eine Temperaturänderung korrespondierend zu einem Anstieg oder zu einer Abnahme einer (Strom-)Belastung der Phasenleiter auftreten. Somit ist ein derartiger Anstieg einer bestimmten Zeitkonstante auf ein reguläres Betriebsverhalten zurückzuführen. Tritt jedoch an einer Auswahl von Phasenleitern (Einzahl oder Mehrzahl aus einer Gruppe von Phasenleitern) eine Abweichung der Temperaturen zueinander auf und ist dabei kein Korrespondieren zu geänderten elektrischen Belastungen (geänderter Stromfluss) erkennbar, ist dies ein Indiz für das Vorliegen einer Unregelmäßigkeit, die einer näheren Betrachtung bedarf. Insbesondere ein rasches Ansteigen von Temperaturen/ Abweichungen von Temperaturen lässt auf eine Störung schließen. Üblicherweise ist die Übertragung von elektrischer Energie hinsichtlich thermischer Änderungen mit langen Zeitkonstanten verbunden. Eine hohe Änderungsgeschwindigkeit führt zu einem steilen Anstieg im Verlauf der jeweiligen gemessenen Temperatur/ Abweichung von Temperaturen. Eine hohe Änderungsgeschwindigkeit, beispielsweise lediglich auf einem der Phasenleiter, führt auch zu einer hohen Änderungsgeschwindigkeit der ermittelten Temperaturdifferenz. Entsprechend kann bei einem Vorliegen von Abweichungen der Temperaturen auf den Phasenleitern vor einer Signalisierung derselben eine Verifizierung durch den Grad der Änderungsgeschwindigkeit einer Temperatur/ einer Abweichung von Temperaturen vorgenommen.

Eine weitere Ausgestaltung kann vorsehen, dass zu einem gleichen Zeitpunkt ein den ersten Phasenleiter belastender erster elektrischer Strom und ein den zweiten Phasenleiter belastender zweiter elektrischer Strom ermittelt wird, die ermittelten elektrischen Ströme verglichen werden und das bei einem Vorliegen einer Abweichung der ermittelten Ströme voneinander eine Verifizierung der Abweichung der ermittelten Temperaturen erfolgt.

In Elektroenergieübertragungseinrichtungen wird üblicherweise auch der elektrische Strom, welcher auf einem Phasenleiter fließt und die elektrische Spannung, welche den Strom durch den Phasenleiter treibt, gemessen. Diese Informationen liegen beispielsweise vor, um Schutzgeräte anzusteuern. Im Allgemeinen sollte die Änderung eines elektrischen Stromes mit der daraus folgenden Änderung der Temperatur des ihn führenden Phasenleiters korrespondieren. Dabei ist zu beachten, dass aufgrund von Zeitkonstanten eine Änderung der Temperatur auf einen Anstieg des elektrischen Stroms beziehungsweise ein Abfallen des elektrischen Stroms zeitversetzt folgt. Insofern ist ggf. eine Verzögerung zu beachten, um nicht zu Missinterpretationen zu gelangen. Im Allgemeinen sollte jedoch mit erhöhtem Belasten eines Phasenleiters eine erhöhte Temperatur am Phasenleiter auftreten. Umgekehrt wird im Allgemeinen mit einer Abnahme der Belastung des Phasenleiters eine Abnahme der Temperatur einhergehend. Insofern ist es vorteilhaft, den Strom des ersten Phasenleiters mit dem Strom des zweiten Phasenleiters zu vergleichen und hier eine Abweichung zu ermitteln. Eine Abweichung der Ströme sollte dabei zu der Abweichung der Temperaturen von Phasenleitern korrespondieren, so dass eine Abweichung der Temperaturen durch eine Abweichung der Ströme miteinander überprüft werden kann. Es kann beispielsweise auch vorgesehen sein, die gemessenen Temperaturen jeweils ins Verhältnis zu den gemessenen Strömen zu setzen und bei einem Korrespondieren beispielsweise auf eine asymmetrische Belastung der Phasenleiter untereinander zu schließen. Dies kann auf ein bestimmtes Betriebsregime rückzuführen sin und gerade nicht auf eine Störung eines der Phasenleiter.

Dabei kann vorteilhaft vorgesehen sein, dass eine Temperaturabweichung und eine Stromabweichung der jeweiligen Phasenleiter hinsichtlich einer Gleichartigkeit der Temperaturabweichung und der Stromabweichung geprüft werden.

Neben einem Abweichen von Temperaturen zwischen verschiedenen Phasenleitern (Abweichung kann auch Null betragen), kann auch eine Abweichung der Strombelastung auf den unterschiedlichen Phasenleitern (Stromabweichung kann Null betragen) vorliegen. Bei gleichartigen Abweichungen der Temperaturen und der Ströme kann auf eine entsprechende asymmetrische Belastung rückgeschlossen werden. Liegt jedoch eine gleichartige Strombelastung (keine Stromabweichung, aber jedoch eine Temperaturabweichung), so scheint dies auf einer Unregelmäßigkeit bei gleichartiger elektrischer Strombelastung hinzudeuten, wodurch auf eine Störung auf einem Phasenleiter rückgeschlossen werden kann. Entsprechend kann diese Prüfung beziehungsweise Gegenprüfung der Temperaturabweichungen und Stromabweichungen auf den jeweiligen Phasenleitern und auf den Phasenleitern untereinander einer Verifizierung, insbesondere vor einer Abgabe eine Signalisierung dienen. Es kann jedoch auch vorgesehen sein, dass eine Verifizierung erst nach Abgabe einer Signalisierung erfolgt. Je nach Bedarf können die verschiedenen Verifizierungsgrößen, z.B. Änderungsgeschwindigkeit einer Temperatur, Vergleich der Änderung von elektrischen Strömen und Temperaturen auf dem jeweiligen Phasenleiter, Temperaturabweichung und Stromabweichung der Phasenleiter untereinander usw. zu einer erhöhten Qualität der Überwachung der Belastung der Elektroenergieübertragungseinrichtung führen.

Vorteilhafterweise kann weiter vorgesehen sein, dass eine Prüfung einer Abweichung auf Verlassen eines vorgegebenen Toleranzbandes erfolgt.

Ein Toleranzband kann sowohl für Abweichungen hinsichtlich der Temperatur als auch für Abweichungen hinsichtlich des elektrischen Stromes vorgesehen sein. Je nach Elektroenergieübertragungsnetz beziehungsweise Elektroenergieübertragungseinrichtung können asymmetrische Belastungen auftreten, beispielsweise durch das Vorliegen von asymmetrischen Abnehmern usw. Hier ist es von Vorteil einen Toleranzband zu definieren, innerhalb welchem Temperaturdifferenzen beziehungsweise auch Stromdifferenzen zwischen Phasenleitern akzeptabel sind. Erst bei einem Verlassen der Toleranzbände kann dies auf ein Vorliegen einer Störung hindeuten, wodurch eine Signalisierung notwendig wird. Neben einem Toleranzband für die Abweichungen selbst kann auch vorgesehen sein, dass ein zeitliches Toleranzbank an von aufeinander folgenden Messwerten für unterschiedliche physikalische Größen, z.B. für den elektrischen Strom und Temperaturen eingeräumt wird. Dies trägt der stets vorhandenen Zeitkonstante Rechnung, mit welcher eine Temperaturerhöhung beziehungsweise Temperaturabsenkung verzögert auf eine Stromänderung erfolgt.

Eine weitere vorteilhafte Ausgestaltung kann vorsehen, dass ausgehend von ermittelten Messwerten insbesondere für Temperaturen und/ oder Ströme eine Prognose für den Verlauf der Temperaturbelastung zumindest eines der Phasenleiter erstellt wird.

Ausgehend von ermittelten Messwerten der Temperatur ggf. eines gemessenen elektrischen Stromes kann ein Temperaturverlauf prognostiziert werden. Dabei kann in die Prognose des Verlaufs der Temperaturbelastung auch die Zeitkonstante der Phasenleiter einfließen. Beispielsweise können je nach Einsatz des Phasenleiters z.B. mit einer Fluidisolation, einer Feststoffisolation, einer Einhausung usw. zu unterschiedlichen Wärmeabgabeverhalten des Phasenleiters führen. Je nach dem weist der Phasenleiter eine unterschiedliche Zeitkonstante auf, mit welcher eine thermische Änderung erflogt. Unter Beachtung dieser Zeitkonstante können beispielsweise bei einem Ansteigen einer Temperatur und einem damit verbundenen zeitverzögerten weiteren Ansteigen der Temperatur beispielsweise das Erreichen eines Schwellwertes prognostiziert werden. Eine Prognosefunktion beschreibt den erwarteten zeitlichen Verlauf einer Temperaturänderung So ist es beispielsweise möglich, unter Einbeziehung der Steilheit (1. Ableitung der Prognosefunktion) der Änderung der Temperatur auf den Zeitpunkt des Erreichens eines Schwellwertes zu schließen. Zur Ermittlung von Minima und Maxima kann ein Gradientenverfahren eingesetzt werden. Insbesondere bei auf Störungen zurückzuführenden kann beispielsweise rechtzeitig eine Umschaltung vorgenommen werden, um ein prognostiziertes Erreichen eines Schwellwertes abzuwenden.

Eine weitere vorteilhafte Ausgestaltung kann vorsehen, dass die Verfahrensschritte in einem dezentralen Datenverarbeitungssystem ausgeführt werden.

Das Überwachungsverfahren ist bevorzugt kontinuierlich durchzuführen. Je nach vorhandenen Sensoren oder Rechenkapazität können in kürzeren oder längeren Intervallen entsprechende Messungen und Vergleiche und notwendige Schlussfolgerungen beziehungsweise Prognosen erstellt werden. Mit einem dezentralen Datenverarbeitungssystems können eine Vielzahl von Informationen beispielsweise auch längs eines Phasenleiters zusammengeführt und miteinander verknüpft werden können, so dass man beispielsweise auch über einen längeren Verlauf eines Phasenleiters lokale Abweichungen von Messwerten im Verlauf des Phasenleiters diagnostizieren kann. Eine dezentrale Datenverarbeitung ermöglicht es, die Daten dezentral zu sammeln und ggf. auch dezentral zu bearbeiten und verarbeiten. Somit ist eine Möglichkeit gegeben, kostengünstig ausreichende Rechenkapazitäten zur Verfügung zu stellen, um beispielsweise auch breit ausgestreckte Phasenleiter beispielsweise in Transmissionsnetzen zu überwachen. Derartige Phasenleiter können Distanzen von mehreren hundert Kilometern aufweisen, wobei im Verlauf an einer Mehrzahl von Punkten eine Temperaturmessung auf den Phasenleitern vorgenommen werden kann. Somit ist einerseits die Temperaturdifferenz zwischen Phasenleitern aber auch die eine Temperaturdifferenz im Verlauf der Phasenleiter ermittelbar.

Eine weitere vorteilhafte Ausgestaltung kann vorsehen, dass ein Computerprogrammprodukt, welches bei Ablauf des Programms auf einem Datenverarbeitungssystem dazu ausgebildet ist, ein Verfahren nach einem der vorstehenden Schritte auszuführen.

Insbesondere eine kontinuierliche Überwachung weist den Vorteil, dass in kurzen Zeitintervallen eine wiederholte Messung von Temperaturen ermöglicht ist. Entsprechend kann rasch auf Änderungen der Temperaturen reagiert werden. Weiter können entsprechend genaue Prognosen für einen erwarteten Temperaturverlauf bereitgestellt werden. Das Datenverarbeitungssystem kann dabei ein dezentrales Datenverarbeitungssystem sein.

Eine weitere Aufgabe der Erfindung ist es, eine Elektroenergieübertragungseinrichtung mit einem ersten Phasenleiter und einem zweiten Phasenleiter sowie einer ersten Strommesseinrichtung für den ersten Phasenleiter und einer zweiten Strommesseinrichtung für den zweiten Phasenleiter anzugeben, wobei der erste Phasenleiter einen ersten Temperatursensor und der zweite Phasenleiter einen zweiten Temperatursensor aufweist, welche durch ein Überwachungsverfahren einer Überwachung unterzogen werden kann.

Erfindungsgemäß wird die Aufgabe bei einer Elektroenergieübertragungseinrichtung der vorstehend genannten Art dadurch gelöst, dass zumindest die Temperatursensoren mit einem dezentralen Rechnersystem verbunden sind, welches dazu eingerichtet ist, das Verfahren nach einem der Ansprüche 1 bis 6 auszuführen.

Eine Elektroenergieübertragungseinrichtung dient der Übertragung elektrischer Energie. Dazu werden Phasenleiter eingesetzt, welche potenzialdifferenzgetrieben der Führung eines elektrischen Stromes dienen. Die Phasenleiter sind dazu elektrisch isoliert ausgebildet. Zur Überwachung der Strombelastung der Phasenleiter sind auf dem ersten Phasenleiter sowie auf dem zweiten Phasenleiter eine erste Strommesseinrichtung sowie eine zweite Strommesseinrichtung angeordnet, so dass eine Strombelastung für den jeweiligen Phasenleiter ermittelt werden kann. Zusätzlich kann dem ersten Phasenleiter ein erster Temperatursensor (Sensor) und dem zweiten Phasenleiter ein zweiter Temperatursensor (Sensor) zugeordnet sein. Dadurch ist es möglich, neben einer Strombelastung des jeweiligen Phasenleiters auch die thermische Belastung des jeweiligen Phasenleiters zu ermitteln. Dies ermöglicht es beispielsweise sowohl eine Strombelastung als auch eine Temperaturbelastung zu ermitteln und etwaige Abweichungen in Strom- und Wärmebelastung einzelner Phasenleiter zu prüfen und ggf. auftretende thermische Abweichungen als betriebssituationsbedingt zu verwerfen. Lediglich beim Auftreten von Störungen, welche beispielsweise ein Toleranzband zu überschreiten haben, kann eine entsprechende Signalisierung vorgenommen werden.

Es ist vorgesehen, dass zumindest die Temperatursensoren mit einem dezentralen Rechnersystem verbunden sind.

Eine Einbindung der Temperatursensoren in ein dezentrales Rechnersystem ermöglicht es, die Informationen der Temperatursensoren dezentral zu verarbeiten. Das dezentrale Rechnersystem (Datenverarbeitungssystem) kann dabei vorteilhaft verschieden zu einem Rechnersystem (Datenverarbeitungssystem) ausgestaltet sein, welches der Verarbeitung der von Strommesseinrichtungen gelieferten Informationen dient. Somit kann eine Redundanz der Verarbeitung der Temperatur- und Stromwerte erfolgen.

Im Folgenden wird ein Ausführungsbeispiel der Erfindung schematisch in einer Zeichnung gezeigt und nachfolgend näher beschrieben. Dabei zeigt die
- Figur 1: eine perspektivische Ansicht einer Elektroenergieübertragungseinrichtung mit dezentralem Datenverarbeitungssystem, die
- Figur 2: eine Abbildung der ermittelten Messwerte / einer ermittelten Prognose für den Verlauf einer Temperaturbelastung.

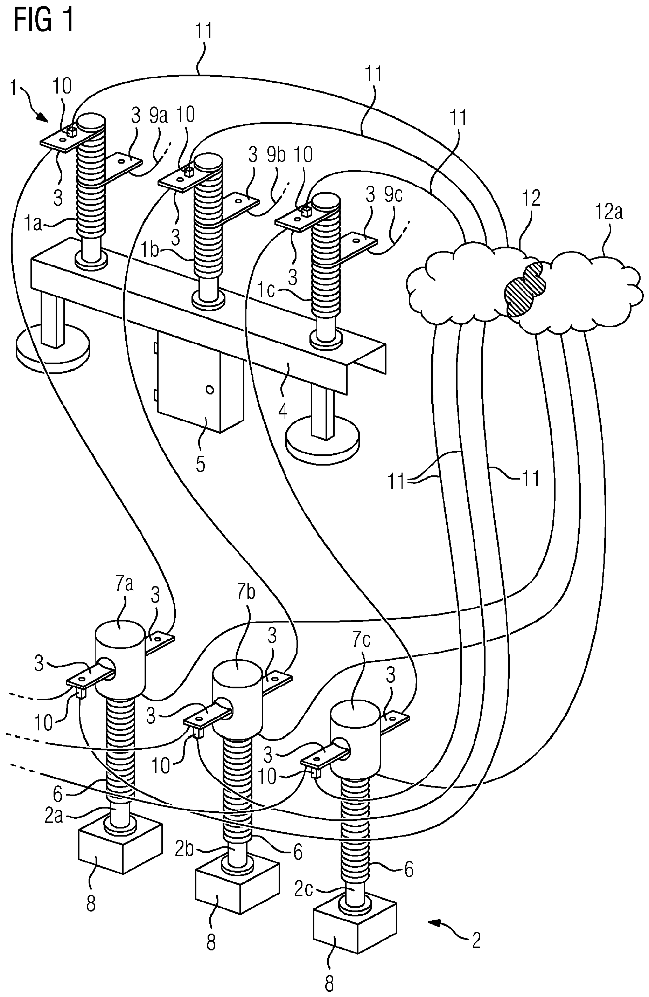

Die Figur 1 zeigt eine erste Elektroenergieübertragungseinrichtung 1 sowie eine zweite Elektroenergieübertragungseinrichtung 2 in perspektivischer Ansicht. Bei der ersten Elektroenergieübertragungseinrichtung 1 handelt es sich um einen so genannten Leistungsschalter in Freiluftausführung. Der Leistungsschalter in Freiluftausführung ist dabei dreipolig ausgeführt, d.h. er verfügt über einen ersten Schaltpol 1a, einen zweiten Schaltpol 1b sowie einen dritten Schaltpol 1c. Jeder der Schaltpole 1a, 1b, 1c weist in seinem Inneren eine Unterbrechereinheit auf, welcher einem Unterbrechen eines Strompfades dient. Die Unterbrechereinheiten sind jeweils über Anschlussarmaturen 3 elektrisch kontaktierbar. Dazu sind die Anschlussarmaturen 3 an elektrisch isolierenden Gehäusen der jeweiligen Schalterpole 1a, 1b, 1c angeordnet. Die Schalterpole 1a, 1b, 1c der ersten Elektroenergieübertragungseinrichtung 1 sind auf einem Tragegestell 4 angeordnet. Über das Traggestell 4 sind die Schalterpole 1a, 1b, 1c beabstandet zu einem Fundament gehalten. An dem Traggestell 4 ist weiter ein Sekundärschrank 5 befestigt, in welchem Sekundärmodule sowie eine Antriebseinrichtung angeordnet sind. Mittels der Antriebseinrichtung sind relativ zueinander bewegbare Schaltkontaktstücke der Schaltpole 1a, 1b, 1c antreibbar. Somit ist über die Antriebseinrichtung eine Schalthandlung der ersten Elektroenergieübertragungseinrichtung 1 initiierbar. Die Sekundärmodule, die weiterhin im Sekundärschrank 5 angeordnet sind, dienen beispielsweise einem Ansteuern, Überwachen, Schützen usw. der ersten Elektroenergieübertragungseinrichtung 1. Bei den Sekundärmodulen kann es sich beispielsweise um Steuereinheiten, Überwachungseinheiten, Schnittstellen, Sensoren usw. handeln.

Bei der zweiten Elektroenergieübertragungseinrichtung 2 handelt es sich um einen Stromwandler, welcher dreipolig aufgebaut ist. Drei Stromwandlerpole 2a, 2b, 2c weisen jeweils einen Stützisolator 6 auf. Über den jeweiligen Stützisolator 6 des jeweiligen Stromwandlerpoles 2a, 2b, 2c ist jeweils ein Aktivteil 7a, 7b, 7c elektrisch isoliert abgestützt. Im Aktivteil ist jeweils ein Primärstrompfad angeordnet, welcher über Anschlussarmaturen 3 jeweils außerhalb des Aktivteils 7a, 7b, 7c elektrisch kontaktierbar ist. Der jeweilige Primärstrompfad des jeweiligen Aktivteils 7a, 7b, 7c dient einem Auskoppeln von Informationen über einen den Primmärleiter durchfließenden elektrischen Strom. Beispielsweise kann dazu ein transformatorisches Prinzip eingesetzt werden, bei welchem ausgehend vom Primärleiter eine Transformation auf eine Sekundärwicklung (im Inneren des jeweiligen Aktivteils 7a, 7b, 7c in der Figur nicht erkenntlich) vorgenommen werden kann. Die von dem Sekundärteil ermittelten Messwerte können beispielsweise drahtgebunden oder drahtlos beispielsweise in ein am Sockel des jeweiligen Stromwandlerpols 2a, 2b, 2c befindlichen Sekundärschrank 8 übertragen werden. In den Sekundärschränken 8 können entsprechende Sekundärmodule angeordnet sein, um die von dem Messwandler gelieferten Informationen zum Stromfluss beispielsweise über ein Datennetz weiter zu verteilen.

Die erste Elektroenergieübertragungseinrichtung 1 sowie die zweite Elektroenergieübertragungseinrichtung 2 sind in eine Elektroenergieübertragungsleitung eingebunden und in Reihe zueinander verschaltet. Bei der Elektroenergieübertragungsleitung handelt es sich um eine dreipolige Elektroenergieübertragungsleitung, welche der Übertragung einer dreiphasigen Wechselspannung dient. Die Elektroenergieübertragungsleitung weist dabei einen ersten Phasenleiter 9a, einen zweiten Phasenleiter 9b sowie einen dritten Phasenleiter 9c auf. Im Verlauf jedes der drei Phasenleiter 9a, 9b, 9c ist jeweils einer der Schaltpole 1a, 1b, 1c angeordnet sowie jeweils einer der Stromwandlerpole 2a, 2b, 2c. Dadurch ist im Verlauf des jeweiligen Phasenleiters 9a, 9b, 9c jeweils eine Unterbrechereinheit eines Schaltpoles 1a, 1b, 1c angeordnet, auf welchen folgend ein Primärleiter eines Stromwandlerpoles 2a, 2b, 2c eines Aktivteils 7a, 7b, 7c angeordnet ist. In dem in der Figur 1 dargestellten Abschnitt der Elektroenergieübertragungsleitung ist eine Freiluftausführung gezeigt, d.h. die drei Phasenleiter 9a, 9b, 9c sind in diesem gezeigten Ausschnitt als freiluftisolierte Leiterseile ausgeführt. Um eine Kontaktierung mit der ersten Elektroenergieübertragungseinrichtung 1 sowie der zweiten Elektroenergieübertragungseinrichtung 2 vornehmen zu können, sind die Phasenleiter 9a, 9b, 9c mit den jeweiligen Anschlussarmaturen 3 der jeweiligen Schalterpole 1a, 1b, 1c sowie der jeweiligen Stromwandlerpole 2a, 2b, 2c elektrisch leitend verbunden.

Über die erste Elektroenergieübertragungseinrichtung 1 ist es möglich, die Phasenleiter 9a, 9b, 9c der Elektroenergieübertragungsleitung zu schalten, d.h. diese zu unterbrechen beziehungsweise durchzuschalten. Bei einem entsprechenden Stromfluss auf den einzelnen Phasenleitern 9a, 9b, 9c kann so mittels der Stromwandlerpole 2a, 2b, 2c der zweiten Elektroenergieübertragungseinrichtung 2 der fließende Strom ermittelt beziehungsweise bei einem Unterbrechen der Phasenleiter 9a, 9b, 9c durch die Unterbrechereinheiten der Schaltpole 1a, 1b, 1c ein Abschalten des elektrischen Stromes detektiert werden.

Um weitere Informationen über den Zustand der ersten beziehungsweise der zweiten Elektroenergieübertragungseinrichtung 2 zu ermitteln, sind an jedem der Schaltpole 1a, 1b, 1c sowie an jedem der Stromwandlerpole 2a, 2b, 2c Temperatursensoren 10 angeordnet. Die Temperatursensoren 10 dienen einer Erfassung der Temperatur der jeweiligen Phasenleiter 9a, 9b, 9c, welche einen Teil der ersten beziehungsweise der zweiten Elektroenergieübertragungseinrichtung 1, 2 bilden. Vorliegend sind zur Positionierung der Temperatursensoren 10 die Anschlussarmaturen 3 genutzt. Die Anschlussarmaturen 3 bilden dabei eine ausreichend mechanische stabile Aufnahme, um die Temperatursensoren 10 zu halten. Andererseits sind die Anschlussarmaturen 3 Teile der Phasenleiter 9a, 9b, 9c und somit von einem dort fließenden elektrischen Strom durchflossen und mit einem Stromwärmeeffekt beaufschlagt. Vorliegend ist die Wahl der Position der Temperatursensoren 10 an den Anschlussarmaturen 3 derart gewählt, dass lediglich die ausgangsseitig liegenden Anschlussarmaturen 3 der ersten Elektroenergieübertragungseinrichtung 1 beziehungsweise der zweiten Elektroenergieübertragungseinrichtung 2 genutzt werden. Bedarfsweise kann jedoch auch eine eingangsseitige Positionierung von Temperatursensoren 10 vorgesehen sein oder auch eine sowohl eingangsseitige als auch ausgangsseitige Positionierung von Temperatursensoren 10 erfolgen.

Die Temperatursensoren 10 sind über Informationskanäle 11 mit einem dezentralen Rechnersystem 12 (Datenverarbeitungssystem) verbunden. Die Temperatursensoren 10 können dabei unmittelbar mit dem dezentralen Rechnersystem 12 kommunizieren. Es kann jedoch auch vorgesehen sein, dass lokale Vermittlungseinrichtungen, beispielsweise eine lokale Vermittlungseinrichtung für die erste Elektroenergieübertragungseinrichtung 1 sowie eine lokale Vermittlungseinrichtung für die zweite Elektroenergieübertragungseinrichtung 2, vorgesehen sind, welche die von den Temperatursensoren 10 jeweils gelieferten Informationen (Daten) beispielsweise zwischenspeichern, formatieren, in ein bestimmtes Datenprotokoll transferieren, weitere Informationen wie Temperaturinformationen der Umgebung, Informationen über die Position der Vermittlungseinrichtung beziehungsweise der Temperatursensoren 10 anfügt und die von den Temperatursensoren 10 gelieferten Informationen ergänzt.

Das dezentrale Rechnersystem 12, welches die von den Temperatursensoren 10 direkt oder indirekt über eine Vermittlungseinrichtung gelieferten Daten empfängt, kann auch eine Verarbeitung dieser Daten vornehmen. Neben dem dezentralen Rechnersystem 12 kann ein weiteres Rechnersystem 12a vorgesehen sein. Das weitere Rechnersystem 12a (weiteres Datenverarbeitungssystem) kann Informationen mit dem dezentralen Rechnersystem 12 austauschen. Das weitere dezentrale Rechnersystem 12a kann Teil des dezentralen Rechnersystems 12 sein, kann mit diesem vollständig deckungsgleich sein. Es kann jedoch auch vorgesehen sein, dass das weitere dezentrale Rechnersystem 12 vollständig unabhängig von dem dezentralen Rechnersystem 12 ausgeführt ist, so dass die von den Stromwandlerpolen 2a, 2b, 2c der zweiten Elektroenergieübertragungseinrichtung 2 gelieferten Informationen bezüglich eines Stromflusses unabhängig verarbeitet werden.

Das dezentrale Rechnersystem 12 kann beispielsweise eine Anzeigeeinrichtung aufweisen, in welcher beispielsweise eine grafische Darstellung der von Messwerten der Temperatursensoren 10 beziehungsweise von prognostizierten Temperaturen dargestellt werden können.

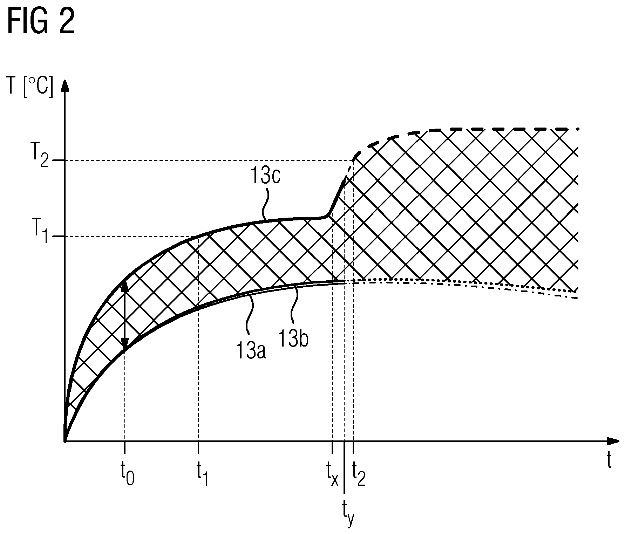

In der Figur 2 ist ein entsprechendes Diagramm abgebildet, in welchem über der Zeit t eine Temperatur T in Grad Celsius abgebildet ist. Dabei sind eine erste Temperaturschwelle T1 sowie eine zweite Temperaturschwelle T2 definiert. Die erste Temperaturschwelle T1 ist dabei ein Temperaturwert, welcher eine hohe Auslastung eines der Phasenleiter 9a, 9b, 9c in thermischer Hinsicht abbildet. Erfahrungsgemäß ist diese Temperatur im Wesentlichen durch einen Stromfluss auf den Stromleitern beeinflusst. Selbst bei einer äußeren Beeinflussung der Temperaturen auf den Stromleitern, beispielsweise durch Sonneneinstrahlung, tritt diese im Regelfalle gleichmäßig an der ersten beziehungsweise zweiten Elektroenergieübertragungseinrichtung 1, 2 auf. Insofern kann auch auf thermische Überlastungen, die nicht ausschließlich durch einen Stromfluss auf den Phasenleitern 9a, 9b, 9c hervorgerufen wird, reagiert werden. Die zweite Temperaturschwelle T2 bildet eine Temperatur an den Phasenleitern 9a, 9b, 9c ab, welche nicht tolerierbar ist und welche zu einem Handlungsbedarf führt. Beispielsweise kann ein Abschalten der Phasenleiter 9a, 9b, 9c durch die erste Elektroenergieübertragungseinrichtung 1 nötig werden. In der Figur 2 sind drei Graphen dreier Temperaturverläufe dargestellt. Der erste Temperaturverlauf 13a bildet den Temperaturverlauf am ersten Phasenleiter 9a am ersten Schaltpol 1a ab. Der zweite Temperaturverlauf 13b bildet den Temperaturverlauf des zweiten Phasenleiters 9b am zweiten Schaltpol 1b der ersten Elektroenergieübertragungseinrichtung 1 ab. Der dritten Temperaturverlauf 13c bildet den Temperaturverlauf des dritten Phasenleiters 9c am dritten Schaltpol 1c der ersten Elektroenergieübertragungseinrichtung 1 ab. Auf eine Darstellung der Temperaturverläufe, welche über die Temperatursensoren 10 an den Stromwandlerpolen 2a, 2b, 2c der zweiten Elektroenergieübertragungseinrichtung 2 beruhen, wurde in der Figur 2 verzichtet. Ggf. können diese Temperaturverläufe in einem weiteren Diagramm oder ergänzend in dem Diagramm gemäß Figur 2 dargestellt werden.

Wie man den Graphen des ersten Temperaturverlaufs 13a sowie des zweiten Temperaturverlaufs 13b entnimmt, ist bis zu einem Zeitpunkt ty ein annähernd gleichartiges thermisches Verhalten am ersten Schaltpol 1a sowie am zweiten Schaltpol 1b der ersten Elektroenergieübertragungseinrichtung 1 festzustellen. Der dritte Temperaturverlauf 13c am dritten Schaltpol 1c der ersten Elektroenergieübertragungseinrichtung 1 zeigt ein abweichendes Verhalten auf. Durchgängig ist das Temperaturniveau am dritten Schaltpol 1c höher einzuschätzen als die Temperaturniveaus am ersten Schaltpol 1a sowie am zweiten Schaltpol 1b. Zwischen den Temperaturverläufen 13a, 13b, 13c liegt eine Abweichung der Temperaturen vor. Die Abweichung liegt bis zum Zeitpunkt t0 jedoch noch innerhalb eines Toleranzbandes. Zum Zeitpunkt t0 verlässt die Abweichung der Temperaturen das Toleranzband und eine Signalisierung kann erfolgen. Entsprechend erreicht zum Zeitpunkt t1 die Temperatur am dritten Schaltpol 1c die erste Temperaturschwelle T1. Mit Erreichen der ersten Temperaturschwelle T1 kann eine Warnung (Signalisierung) abgegeben werden. Zum Zeitpunkt tx ist ein stärkerer Anstieg des dritten Temperaturverlaufs 13c feststellbar. Bis zu einem Zeitpunkt ty steigt die Temperatur deutlich steiler als in den vorhergehenden Zeiträumen an. Basierend auf diesem steilen Anstieg kann eine Prognose des dritten Temperaturverlaufs 13c (punktierte Darstellung) vorgenommen werden und in der Prognose wird zu einem Zeitpunkt t2 die zweite Temperaturschwelle T2 erreicht. Nachfolgend kann aufgrund der Prognose der dritte Temperaturverlauf 13c in seinem Anstieg gedämpft verlaufen.

Analog zur Prognose des dritten Temperaturverlaufs 13c kann der erste Temperaturverlauf 13a sowie der zweite Temperaturverlauf 13b in einer Prognose für einen Zeitraum nach ty vorhergesagt werden.

Sowohl im Bereich der gemessenen Werte der Temperaturverläufe 13a, 13b, 13c als auch im Bereich der Temperaturverläufe 13a, 13b, 13c. Liegt zwischen den annähernd gleichartig verlaufenden ersten Temperaturverlauf 13a sowie zweiten Temperaturverlauf 13b bezogen auf den dritten Temperaturverlauf 13c eine Abweichung vor. Diese Abweichung ist in der Figur 2 durch eine rautenförmige Schraffur dargestellt. Entsprechend besteht zu jedem Zeitpunkt der Zeitpunkt t sowohl für die gemessenen Werte auch als für die prognostizierten Werte die Möglichkeit einer Ermittlung der Abweichung der Temperaturen des ersten, zweiten und dritten Temperaturverlaufs 13a, 13b, 13c. Mit dem Erreichen beziehungsweise Überschreiten eines vorgegebenen Toleranzbandes (hier zum Zeitpinkt t0) kann eine entsprechende Signalisierung erfolgen. Beispielsweise kann dies durch ein Einblenden einer entsprechenden Schraffur, wie in der grafischen Darstellung gemäß Figur 2 gezeigt, einen Farbumschlag usw. erfolgen. Bedarfsweise kann auch eine entsprechende Handlungsempfehlung vorgenommen werden.

Um die vorliegende Abweichung und die Signalisierung zu verifizieren, können die Informationen, welche aus dem Zeitverlauf gewonnen werden können, zusätzlich hinzugezogen werden. Beispielsweise kann der in dem Intervall tx-ty vorliegende steile Anstieg und die damit verbundene Abweichung des dritten Temperaturverlaufs 13c gegenüber dem ersten und zweiten Temperaturverlauf 13a, 13b genutzt werden, um die Relevanz der Abweichung zu verifizieren. Des Weiteren kann zur Verifizierung der Abweichung die über den Stromfluss auf den Phasenleitern 9a, 9b, 9c vorliegenden Informationen herangezogen werden. So sind beispielsweise die von der zweiten Elektroenergieübertragungseinrichtung 2 in den einzelnen Stromwandlerpolen 2a, 2b, 2c ermittelten Informationen zum Stromfluss auf den jeweiligen Phasenleitern 9a, 9b, 9c hinzuziehbar. Insofern auf allen drei Phasenleitern 9a, 9b, 9c eine gleichartige Belastung, d.h. ein annähernd gleicher Stromfluss, vorliegt, wobei eine Abweichung innerhalb der Temperaturverteilung in den drei Phasenleitern 9a, 9b, 9c ermittelt wurde, ist auf das Vorliegen einer Störung zu schließen. Somit kann eine Abweichung hinsichtlich des Vorliegens einer Störung durch eine Auswertung der Strombelastungen verifiziert werden.

Im Umkehrschluss kann bei einem Übereinstimmen des Abweichens von Temperaturen hinsichtlich einer Strombelastung auf den einzelnen Phasenleitern 9a, 9b, 9c vor Abgabe einer Signalisierung dieselbe verworfen werden.

## Patentansprüche

1. Überwachungsverfahren für eine Elektroenergieübertragungseinrichtung (1,2) mit einem ersten Phasenleiter (9a) und einem zweiten Phasenleiter (9b), wobei zu einem gleichen Zeitpunkt eine Temperatur (13a) des ersten Phasenleiters (9a) und eine Temperatur (13b) des zweiten Phasenleiters (9b) ermittelt wird, die ermittelte Temperatur (13a) des ersten Phasenleiters (9a) mit der ermittelten Temperatur (13b) des zweiten Phasenleiters (9b) verglichen wird und dass
bei Vorliegen einer Abweichung der ermittelten Temperaturen (13a,13b) voneinander eine Signalisierung erfolgt,
**dadurch gekennzeichnet , dass,**
eine Verifizierung der Abweichung durch eine Änderungsgeschwindigkeit einer ermittelten Temperatur (13a,13b) eines Phasenleiters (9a,9b) und/ oder der Abweichung der ermittelten Temperaturen (13a, 13b) erfolgt.

2. Überwachungsverfahren nach Anspruch 1,
**dadurch gekennzeichnet , dass**
zu einem gleichen Zeitpunkt ein den ersten Phasenleiter (9a) belastender erster elektrischer Strom und ein den zweiten Phasenleiter (9b) belastender zweiter elektrischer Strom ermittelt wird, die ermittelten elektrischen Ströme verglichen werden und das bei einem Vorliegen einer Abweichung der ermittelten Ströme voneinander eine Verifizierung der Abweichung der ermittelten Temperaturen (13a,13b) erfolgt.

3. Überwachungsverfahren nach Anspruch 2,
**dadurch gekennzeichnet, dass**
eine Temperaturabweichung und eine Stromabweichung der jeweiligen Phasenleiter (9a,9b) hinsichtlich einer Gleichartigkeit der Temperaturabweichung und der Stromabweichung geprüft werden.

4. Überwachungsverfahren nach einem der Ansprüche 1 bis 3,
**dadurch gekennzeichnet, dass**
eine Prüfung einer Abweichung auf Verlassen eines vorgegebenen Toleranzbandes erfolgt.

5. Überwachungsverfahren nach einem der Ansprüche 1 bis 4,
**dadurch gekennzeichnet, dass**
ausgehend von ermittelten Messwerten insbesondere für Temperaturen (13a,13b) und/ oder Ströme eine Prognose für den Verlauf der Temperaturbelastung zumindest eines der Phasenleiter erstellt wird.

6. Überwachungsverfahren nach einem der Ansprüche 1 bis 5,
**dadurch gekennzeichnet, dass**
die Verfahrensschritte in einem dezentralen Datenverarbeitungssystem (12) ausgeführt werden.

7. Computerprogrammprodukt, welches bei Ablauf des Programms auf einem Datenverarbeitungssystem dazu ausgebildet ist, ein Verfahren nach einem der Ansprüche 1 bis 6 auszuführen.

8. Elektroenergieübertragungseinrichtung (1,2) mit einem ersten Phasenleiter (9a) und einem zweiten Phasenleiter (9b) sowie einer ersten Strommesseinrichtung (7a) für den ersten Phasenleiter (9a) und einer zweiten Strommesseinrichtung (7b) für den zweiten Phasenleiter (9b), wobei
der erste Phasenleiter (9a) einen ersten Temperatursensor (10) und der zweite Phasenleiter (9b) einen zweiten Temperatursensor (10) aufweist,
**dadurch gekennzeichnet, dass**
zumindest die Temperatursensoren (10) mit einem dezentralen Rechnersystem (12) verbunden sind, welches dazu eingerichtet ist, das Verfahren nach einem der Ansprüche 1 bis 6 auszuführen.

## Claims

1. A monitoring method for an electric energy transfer device (1, 2) comprising a first phase conductor (9a) and a second phase conductor (9b), wherein a temperature (13a) of the first phase conductor (9a) and a temperature (13b) of the second phase conductor (9b) are determined simultaneously, the determined temperature (13a) of the first phase conductor (9a) is compared with the determined temperature (13b) of the second phase conductor (9b), and if there is a deviation of the determined temperatures (13a, 13b) from one another, signalling is performed, **characterised in that** the deviation is verified by a rate of change of a determined temperature (13a, 13b) of a phase conductor (9a, 9b) and/or the deviation of the determined temperatures (13a, 13b).

2. The monitoring method according to claim 1,
**characterised in that** a first electric current loading the first phase conductor (9a) and a second electric current loading the second phase conductor (9b) are determined simultaneously, the determined electric currents are compared and, if there is a deviation of the determined currents from one another, the deviation of the determined temperatures (13a, 13b) is verified.

3. The monitoring method according to claim 2,
**characterised in that** a deviation of temperature and a deviation of current of the respective phase conductors (9a, 9b) are tested for a similarity of the deviation of temperature and the deviation of current.

4. The monitoring method according to any one of claims 1 to 3,
**characterised in that** a test for a deviation is performed upon exceeding a preset tolerance band.

5. The monitoring method according to any one of claims 1 to 4,
**characterised in that** a prognosis for the course of the temperature load of at least one of the phase conductors is made based on determined measured values, in particular for temperatures (13a, 13b) and/or currents.

6. The monitoring method according to any one of claims 1 to 5,
**characterised in that** the method steps are executed in a decentralised data processing system (12).

7. A computer programme product which, when the programme runs on a data processing system, is designed to execute a method according to any one of claims 1 to 6.

8. An electric energy transfer device (1, 2) comprising a first phase conductor (9a) and a second phase conductor (9b), and a first current measuring device (7a) for the first phase conductor (9a) and a second current measuring device (7b) for the second phase conductor (9b), wherein the first phase conductor (9a) has a first temperature sensor (10), and the second phase conductor (9b) has a second temperature sensor (10),
**characterised in that** at least the temperature sensors (10) are connected to a decentralised computer system (12) which is configured to execute the method according to any one of claims 1 to 6.

## Revendications

1. Procédé de surveillance d'un dispositif de transfert d'énergie électrique (1, 2) comprenant un premier conducteur de phase (9a) et un deuxième conducteur de phase (9b), dans lequel, à un même instant, une température (13a) du premier conducteur de phase (9a) et une température (13b) du deuxième conducteur de phase (9b) sont déterminées, la température déterminée (13a) du premier conducteur de phase (9a) est comparée à la température déterminée (13b) du deuxième conducteur de phase (9b) et
dans le cas où il existe un écart entre les températures déterminées (13a, 13b), un signal est émis, **caractérisé en ce qu'**une vérification de l'écart est effectuée en utilisant un taux de variation d'une température déterminée (13a, 13b) d'un conducteur de phase (9a, 9b) et/ou l'écart entre les températures déterminées (13a, 13b).

2. Procédé de surveillance selon la revendication 1,
**caractérisé en ce qu'**à un même instant, un premier courant électrique chargeant le premier conducteur de phase (9a) et un deuxième courant électrique chargeant le deuxième conducteur de phase (9b) sont déterminés, les courants électriques déterminés sont comparés et, en cas d'écart entre les courants déterminés, une vérification de l'écart entre les températures déterminées (13a, 13b) est effectuée.

3. Procédé de surveillance selon la revendication 2,
**caractérisé en ce qu'**un écart de température et un écart de courant des conducteurs de phase respectifs (9a, 9b) sont contrôlés en termes d'uniformité de l'écart de température et de l'écart de courant.

4. Procédé de surveillance selon l'une quelconque des revendications 1 à 3,
**caractérisé en ce qu'**un contrôle d'écart est effectué lorsqu'une bande de tolérance prédéfinie est dépassée.

5. Procédé de surveillance selon l'une quelconque des revendications 1 à 4,
**caractérisé en ce qu'**à partir des valeurs mesurées déterminées, en particulier pour les températures (13a, 13b) et/ou les courants, une prévision de l'évolution de la charge thermique d'au moins l'un des conducteurs de phase est établie.

6. Procédé de surveillance selon l'une quelconque des revendications 1 à 5,
**caractérisé en ce que** les étapes du procédé sont réalisées dans un système de traitement de données décentralisé (12).

7. Produit de programme informatique qui, lors de l'exécution du programme sur un système de traitement de données, est conçu pour réaliser un procédé selon l'une quelconque des revendications 1 à 6.

8. Dispositif de transmission d'énergie électrique (1, 2) comprenant un premier conducteur de phase (9a) et un deuxième conducteur de phase (9b) ainsi qu'un premier dispositif de mesure de courant (7a) pour le premier conducteur de phase (9a) et un deuxième dispositif de mesure de courant (7b) pour le deuxième conducteur de phase (9b), dans lequel le premier conducteur de phase (9a) comprend un premier capteur de température (10) et le deuxième conducteur de phase (9b) comprend un deuxième capteur de température (10),
**caractérisé en ce qu'**au moins les capteurs de température (10) sont reliés à un système informatique décentralisé (12) qui est conçu pour réaliser le procédé selon l'une quelconque des revendications 1 à 6.
